(19) **Europäisches Patentamt**

**European Patent Office**

**Office européen des brevets**

(11) **EP 1 260 850 B1**

(12) **EUROPÄISCHE PATENTSCHRIFT**

(45) Veröffentlichungstag und Bekanntmachung des Hinweises auf die Patenterteilung:
**02.11.2005 Patentblatt 2005/44**

(51) Int Cl.7: **G02B 27/48**, G03B 21/56

(21) Anmeldenummer: **01112675.2**

(22) Anmeldetag: **25.05.2001**

(54) **Verfahren und Vorrichtung zur Beseitigung von stationären Bildstörungen bei Bildprojektionen mit zeitlich oder räumlich kohärentem Licht, sowie System zur Bildprojektion**

Method and device for removing stationary defects of images during projection with spatially or temporally coherent light and system for image projection

Méthode et dispositif pour éliminer des perturbations stationnaires d'images pendant la projection d'images avec la lumière cohérente en temps ou dans l'espace et système de projection d'images

(84) Benannte Vertragsstaaten:
**DE FR GB IT SE**

(43) Veröffentlichungstag der Anmeldung:
**27.11.2002 Patentblatt 2002/48**

(73) Patentinhaber: **EADS Deutschland GmbH**
**85521 Ottobrunn (DE)**

(72) Erfinder: **Halldorsson, Thorsteinn, Dr.**
**85586 Poing (DE)**

(56) Entgegenhaltungen:
WO-A-89/06001        US-A- 3 125 927
US-A- 3 640 602       US-A- 4 143 943
US-A- 4 155 630

• MARTINSEN R J ET AL: "SPECKLE IN LASER IMAGERY: EFFICIENT METHODS OF QUANTIFICATION AND MINIMIZATION" CONFERENCE PROCEEDINGS LEOS '99. 12TH ANNUAL MEETING OF THE IEEE LASERS AND ELECTRO-OPTICS SOCIETY. SAN FRANCISCO, CA, NOV. 8 - 11, 1999, ANNUAL MEETING OF THE IEEE LASERS AND ELECTRO-OPTICS SOCIETY, NEW YORK, NY: IEEE, US, Bd. 1, November 1999 (1999-11), Seiten 354-355, XP001015263 ISBN: 0-7803-5635-7

**Beschreibung**

Die Erfindung betrifft ein Verfahren und eine Vorrichtung zur Beseitigung von stationären Bildstörungen bei Bildprojektionen mit kohärentem Licht gemäß den Oberbegriffen von Patentanspruch 1 und Patentanspruch 9. Unter dem Begriff "köhärentes Licht" wird dabei zeitlich oder räumlich köhärentes Licht verstanden. Insbesondere betrifft die Erfindung ein Verfahren zur Unterdrückung von stationärem Bildrauschen in Projektionen mit elektronischen Bildprojektoren auf Leinwände, die Lichtventilmodulatoren zur Bildmodulation und Lasersysteme, LED's oder Lampen als Beleuchtungsquelle verwenden.

Elektronische Bildprojektoren sind neben selbstleuchtenden Bildschirmen, Kathodenstrahlröhren, Plasmabildschirmen und hinterbeleuchteten Flüssigkristalldisplays zur Darstellung von Daten und bewegten Bildern in mehreren Anwendungen weit verbreitet. Beispielsweise werden Aufprojektionen an eine Wand vor allem bei Vorträgen und Präsentationen in kleineren und größeren Räumen genutzt. Mit ihnen können aus verschiedenen Entfernungen unterschiedlich große Wandbilder einem größeren Publikum, wie im Kino, gemeinsam dargeboten werden.

Eine zweite Variante dieser Technologie ist die Projektion auf einen Schirm von hinten, das heißt die Rückprojektion, die den Vorteil bringt, dass eine geringere Störung durch Hintergrundlicht im Raum erfolgt.

Da die Projektionstechnik eine hohe Bildauflösung und guten Kontrast liefert sowie farbtreu ist, dringt sie zunehmend in private Anwendungsbereiche, wie z. B des Heimfernsehers und Computerdisplays hinein, die bisher den selbstleuchtenden Schirmen vorenthalten waren.

Bekannte elektronische Bildprojektoren bestehen beispielsweise aus einem Bildmodulator, dem sogenannten Lichtventil, mit einem zweidimensionalem Array von Einzelbildelementen (Pixel) hoher Anzahl (z. B. 1024 x 768, in der XGA Norm), das entweder in Durchlassrichtung oder in Reflexion mit einer starken Lichtquelle, wie z.B. Hochdrucklampen, Leuchtdioden oder Lasern, ausgeleuchtet wird. Mit Hilfe einer Projektionsoptik wird das Bild des Modulators vergrößert auf die Leinwand projiziert. Teilstrahlen der Grundfarben Rot, Grün und Blau können dann entweder mit Hilfe von drei Modulatoren gleichzeitig oder von einem einzigen Modulator zeitlich hintereinander mit der Bildinformation moduliert werden. Als Bildmodulatoren bzw. Lichtventile werden entweder zweidimensionale Arrays von Flüssigkristallzellen bzw. Mikrospiegeln oder lineare Arrays von Beugungsgittern verwendet. Die heute üblicherweise benutzte Bildwiederholfrequenz liegt zwischen 50 und 120 Hz.

Zur Bilddarstellung bzw. als Projektionsschirme sind für die Aufprojektion lichtstreuende Leinwände und für die Rückprojektion Schirme mit Lamellen-, Linsen- oder Mikrolinsenstrukturen am weitesten verbreitet. Neuerdings werden auch holographische Schirme bzw. Bildschirme als Projektionsschirm eingesetzt, die das Licht von der Schirmoberfläche in einen bestimmten Raumwinkelbereich in Richtung zu dem Betrachter herausbeugen. Derartige holographische Bildschirme bestehen zum Beispiel aus einem Hologramm, bei dessen Aufnahme ein realer Bildschirm als Objekt verwendet wurde. Ein derartiger holografischer Bildschirm ist zum Beispiel in der DE 19700162 A1 beschrieben.

Laser bringen als Beleuchtungsquellen für Projektoren gegenüber anderen Quellen, verschiedene Vorteile: größere Helligkeit, bessere Bündelung ihres Lichtes, einen höheren Sättigungsgrad der Farben und höhere Gesamteffizienz der Umwandlung von elektrischer Leistung in Licht. Laser werden aus diesen Gründen zunehmend als Beleuchtungsquelle in Projektionssystemen eingesetzt.

Mit Leuchtdioden reicht die Helligkeit derzeit nur für kleinere Schirme aus. Die Farben sind dabei zwar nicht so gesättigt wie bei der Verwendung von Lasern, jedoch ergibt sich eine größere Sättigung als bei der Projektion mit Lampen. Wegen ihrer Langlebigkeit werden werden LED's zunehmend für Projektionen in mobilen Systemen verwendet. Für die Großprojektion werden derzeit fast ausschließlich Hochdruck-Lampen aufgrund ihres hohen Lichtstromes verwendet.

Bei der Laserprojektion aber auch allgemein bei der Bildprojektion mit zeitlich inkohärentem Licht besteht aber das grundlegende Problem, dass Bildspeckles auftreten, d.h. es erfolgt eine ungleichmäßige Helligkeits- und Farbverteilung im Bild an der Leinwand. Dieses abwechselnde Verklumpen und Verdünnen der Lichtes durch Lichtinterferenzen entsteht auf Grund der unterschiedlich langen Wegstrecken, die Teilwellen auf ihrem Weg von dem Projektor über den Schirm überbrückt haben, bevor sie im Auge des Betrachters vereint werden. Diese Wegdifferenzen bzw. Gang- oder Phasenunterschiede der Wellen entstehen auf verschiedenen Teilstrecken des Projektors, auf dem Weg von der Quelle zum Modulator, bzw. im Bildmodulator selbst, oder an Oberflächenrauhigkeit bzw. in optischen Dichteschwankungen des Bildschirmes.

Eine Voraussetzung für die Entstehung der Speckles bei Bildprojektionen ist, dass das vom Projektor abgestrahlte Licht zeitlich oder räumlich kohärent ist. Zeitliche Kohärenz bedeutet, dass die abgestrahlten Wellen über einen längeren Weg bzw. über längere Zeit senkrecht zu Ebene der Welle entlang des Ausbreitungsweges in Phase sind. Räumliche Kohärenz bedeutet, dass entlang der Ebene der Welle, d.h. senkrecht zur Ausbreitungsrichtung, eine feste Phasenbeziehung herrscht.

Bei den extrem schmalbandigen Lasern als Quelle ist das Projektorlicht sowohl zeitlich als auch räumlich kohärent, d.h. die Bilder auf den Schirmen sind stark mit Speckles behaftet. Bei Leuchtdioden- oder Lampenprojektoren ist der zeitliche Kohärenzgrad dagegen sehr gering, es herrscht eine extrem kurze Kohärenzlänge. Dafür kann bei einer kleinen Austrittspupille des Lichtes am Projektor der räumliche Kohärenzgrad erheblich sein und ausreichend dafür, dass sich Specklemuster in den Bildpixeln des streuenden Schirmes durch Interferenz mehrerer Teilwellen ausbilden und für das Auge sichtbar sein können.

Zusätzlich zu den Bildspeckles können sich auch Inhomogenitäten und Helligkeitsunterschiede im Bildschirmmaterial selbst dem Bild überlagern und bei der Projektion sichtbar werden. Auch ist eine Übertragung solcher Störungen in mehrstufigen Projektorsystemen auf den letzten Darstellungsschirm für den Betrachter möglich. Dies passiert z. B. wenn zwischen dem Bildmodulator und dem Schirm ein zusätzliches reelles, vergrößertes Zwischenbild auf einem Kleinschirm im optischen Strahlengang erzeugt wird und optische Inhomogenitäten dieses Schirmes weiter auf den Bilddarstellungsschirm vergrößert abgebildet werden.

Bildstörungen beider Art, d.h. sowohl durch Speckles als auch solche durch die Inhomogenitäten des Bildschirmmaterials selbst, verschlechtern die Auflösung, den Kontrast und die Farbwiedergabe des Bildschirmes, d.h. sie verschlechtern insgesamt die Bildqualität erheblich.

Ein bekanntes Verfahren zur Reduktion von Bildspeckles ist in der DE 19703730 A1 beschrieben. Dabei wird der Beleuchtungsstrahl mittels eines Phasenhologramms in Teilstrahlen zerlegt und auf dem Bildschirm innerhalb eines Pixels wieder so überlagert, dass unterschiedliche Specklepatterns entstehen, die sich im Auge des Betrachters zeitlich ausmitteln.

Bei den bekannten Verfahren muss das Bild der Körnigkeit so rasch bewegt werden, dass sie im Auge bzw. im Film ausgemittelt werden. Weil das Auge wegen seiner Trägheit mit einer Bildfrequenzauflösung von etwa 20 Hz die Störung nicht mehr wahrnimmt, wird diese zeitlich ausgemittelt. Für die Ausmittelung der Speckles im Auge muss die Bewegungsamplitude größer sein als die mittlere Größe der Speckles bzw. der Körnigkeit der Bildscheibe.

Obwohl diese Verfahren von ihrem Prinzip her sehr wirkungsvoll sein müssten, ist ihr Erfolg in ihrer praktischen Ausführung bei der Laser-Projektion, z.B. mit Hilfe vibrierender Umlenkspiegel oder Lichtwellenleiter im Strahlengang des Projektors, teilweise eingeschränkt.

Es wurde auch vorgeschlagen, die Specklemodulation in Laserprojektoren durch gleichzeitige Verwendung mehrerer der oben erwähnten, unterschiedlichen Maßnahmen im Strahlengang auf ein erträgliches Maß herabzusetzen (siehe z.B. "Speckle in Laser Imagery: Efficient Methods of Quantification and Minimization", R.J. Martinsen, K. Kennedy and A. Radl, Proceedings of IEEE Conference LEOS 99, San Francisco 8-11 Nov. 1999). Der Aufwand ist dabei jedoch sehr hoch und kostenintensiv.

Bei Bildstörungen durch die Inhomogenität des Schirmmaterials ist die Situation ähnlich. Hier gelingt die Ausmittelung der Störung durch Bewegung des bildtragenden Schirmes nur bei kontinuierlicher Bildbeleuchtung, wie z.B. in einem Vergrößerungsprojektor. Bei elektronischen Bildprojektoren dagegen ist die Ausmittelung wegen der periodischen Ausleuchtung des Schirmes jedoch viel geringer als erwartet.

Die Druckschrift US 3,125,927 beschreibt einen Projektionsbildschirm, der in zweidimensionale Schwingungen versetzt wird, so dass sich kreisförmige oder ellipsenförmige Bewegungen ergeben. Durch diese Maßnahme soll die Auflösung erhöht werden.

Die Druckschrift US 3,640,602 beschreibt einen Projektionsschirm mit zwei parallelen Glasplatten mit lichtstreuenden Schichten, wobei die Glasplatten relativ zueinander Kreisbewegungen ausführen. Dadurch sollen Szintillationen bzw. Lichtflackern vermieden werden.

Aufgabe der Erfindung ist es, Bildstörungen, die durch Speckles oder Inhomogenitäten des Bilddarstellungsschirmes bzw. von Zwischenbildschirmen verursacht werden, wirksamer oder vollkommen zu beseitigen, ohne die ursprüngliche Qualität des Bildes zu beeinträchtigen.

Diese Aufgabe wird gelöst durch das Verfahren zur Beseitigung von stationären Bildstörungen gemäß Patentanspruch 1 und die Vorrichtung zur Beseitigung von stationären Bildstörungen gemäß Patentanspruch 9. Weitere vorteilhafte Merkmale der Erfindung ergeben sich aus den abhängigen Ansprüchen der Beschreibung und den Zeichnungen. Merkmale, die im Zusammenhang mit dem Verfahren beschrieben sind gelten auch für die verschiedenen Elemente der Vorrichtung und umgekehrt.

Gemäß der vorliegenden Erfindung wird ein Verfahren zur Beseitigung von stationären Bildstörungen bei Bildprojektionen mit zeitlich und/oder räumlich kohärentem Licht angegeben, bei dem mit einem Projektionssystem mittels eines Strahls kohärenten Lichts ein Bild auf einen Projektionsschirm projiziert wird und störende Speckles und/oder durch Inhomogenitäten verursachte Störungen zeitlich ausgemittelt werden, wobei mindestens ein optisches Element des Projektionssystems in zwei zueinander senkrechten und senkrecht zur optischen Achse verlaufenden Richtungen in gleichzeitige Schwingungen versetzt wird und während der Projektion in beiden Richtungen bzw. zweidimensional zeitlich sinusförmige Bewegungen ausführt, so dass die Speckles und/oder Störungen durch ihre Bewegung im Auge eines Betrachters beseitigt werden, wobei das optische Element eine Flüssigkeit ist, die in einem Lichtintegrator und/oder einem Lichtwellenleiter enthalten ist und mit Schallwellen beaufschlagt wird.

Durch die Erfindung werden die Störungen durch Bildspeckles und Inhomogenitäten wirksamer beseitigt, d.h., es wird eine volle Wirksamkeit der Ausmittelung erzielt.

Es kann ein Zwischenprojektionsschirm für ein reelles Bild vorhanden sein, das durch eine anschließende weitere Projektion auf einen zweiten Projektionsschirm als reelles oder als virtuelles Bild zur Ansicht für den Betrachter projiziert wird.

Vorteilhafterweise erfolgen die Bewegungen des optischen Elements derart, dass eine zumindest annähernd gleichmäßige Geschwindigkeit der einzelnen Teilelemente des optischen Elements in zwei Dimensionen erfolgt.

Bevorzugt bilden die Bewegungen Lissajou-Bahnen, insbesondere in Form von Kreisen, Ellipsen oder sich kreuzenden Bahnen. Vorteilhafterweise weisen die beiden Schwingungen Frequenzen auf, die zueinander in einem irrationalen Zahlenverhältnis stehen, das insbesondere dem Verhältnis des Goldenen Schnitts entspricht.

Bevorzugt können die beiden Schwingungen mit einem Zufallsfrequenzspektrum angeregt werden.

Bevorzugt wird die Frequenz oder werden die Frequenzen der beiden Schwingungen gegenüber der Bildwiederholfrequenz eines Projektors oder seiner Harmonischen derart eingestellt, dass die jeweilige Differenzfrequenz höher ist als die Auffassungsfrequenz des menschlichen Auges. Das heißt, bevorzugt wird die Differenzfrequenz so gewählt, dass eine Wiederholung der Lissajou-Bahnen nach einer Zeitdauer erfolgt, die länger ist als die Speicherdauer der Wahrnehmung des menschlichen Gehirns für sich wiederholende optische Muster.

Vorteilhafterweise werden die Frequenz oder die Frequenzen der aufeinander senkrecht stehenden Schwingungen gegenüber der Bildwiederholfrequenz des Projektors oder seiner Harmonischen während der Projektion ständig verändert.

Die erfindungsgemäße Vorrichtung zur Beseitigung von stationären Bildstörungen bei Bildprojektionen mit kohärentem Licht umfasst mindestens ein optisches Element zur Führung oder Wiedergabe von kohärentem Licht in einem Projektionssystem, sowie eine Antriebseinrichtung, die mit dem optischen Element gekoppelt ist, um das optische Element in zwei zueinander senkrechten und senkrecht zur optischen Achse verlaufenden Richtungen in gleichzeitige Schwingungen zu versetzen, so dass Speckles und/oder durch Inhomogenitäten verursachte Störungen durch ihre Bewegung im Auge eines Betrachters ausgemittelt werden, wobei das optische Element eine in einem Lichtintegrator oder einem Lichtwellenleiter enthaltenene Flüssigkeit ist, die im Betrieb mit Schallwellen beaufschlagt wird.

Der Projektionsschirm ist zum Beispiel mittels einer Halteeinrichtung parallel zu seiner Oberfläche zweidimensional beweglich gelagert.

Vorteilhafterweise umfasst die Antriebseinrichtung ein oder mehrere Aktoren, die bevorzugt als Piezoaktor und/oder als magnetischer Aktor ausgebildet sind.

Vorteilhaft sind als Antrieb Exzentermotoren vorgesehen, die mit dem optischen Element mechanisch gekoppelt sind und ihre Unwuchtbewegung auf diese übertragen.

Bevorzugt umfasst die Antriebseinrichtung eine Steuereinrichtung zur Ansteuerung der Aktoren auf eine Weise, dass das optische Element im Betrieb Bewegungen insbesondere in Form von Lissajou-Bahnen ausführt, beispielsweise in Form von Kreisen, Ellipsen oder sich kreuzenden Bahnen.

Die Vorrichtung umfasst vorteilhafterweise Elemente, die zur Durchführung des Verfahrens ausgestaltet sind.

Ein System zur Bildprojektion mit kohärentem Licht umfasst eine Lichtquelle zur Erzeugung von zeitlich und/oder räumlich kohärentem Licht und einen Bildmodulator zur Erzeugung eines Bildes mit dem kohärenten Licht, und weiterhin eine erfindungsgemäße Vorrichtung.

Der Erfindung liegen unter anderem die Überlegungen zu Grunde, dass die Ausmittelung der Bildstörungen im Auge des Betrachters zweidimensionale weiche Bewegungen der Schirmpunkte in allen Teilbereichen des Bildschirmes voraussetzt, die vorzugsweise entweder kleiner, gleich oder größer sind, oder aber von gleicher Größenordnung sind wie die Auflösungsgrenze des Auges. Weiterhin sollte jede Änderung der Geschwindigkeit der Teilbereiche unter der Auffassungsgeschwindigkeit des Auges sein. Diese beiden Tatsachen können an Hand von zwei Beispielen dargelegt werden:

Wird z.B. ein reelles Bild auf eine Mattscheibe projiziert, die um eine feste Achse, senkrecht auf die Oberfläche und innerhalb der Scheibe rotiert, dann ist die Rotationsgeschwindigkeit aller Teilbereiche der Scheibe proportional zu ihrem Abstand zu der Achse, d.h. dem Rotationszentrum. Im Zentrum ist die Geschwindigkeit Null und bis zu einem gewissen Abstand vom Zentrum weg bleibt die Geschwindigkeit der Teilbereiche unter der Auffassungsgeschwindigkeit des Auges, in dem keine Ausmittelung der Störung stattfindet.

Wird dagegen die Scheibe, anstatt sie zu rotieren, in einer Richtung periodisch geschüttelt, ist die Bewegung nur in einer Dimension und die Ausmittelung in die zweite senkrechte Achse unvollständig, d.h. es werden dort Störungen als Streifen sichtbar. Eine lineare periodische Bewegung ist auch zeitlich ungleichmäßig, was bedeutet, dass während einer gewissen Zeitdauer in Nähe ihrer Umkehrung, in der die Geschwindigkeit der Teilbereiche des Schirmes unter der Auffassungsgeschwindigkeit des Auges liegt die Störungen für das Auge sichtbar werden.

Bei Specklemustern, die sich bei der Laserprojektion bilden, ist die Situation analog. Wenn das Specklemuster in Rotation versetzt wird, verschwindet es am Rande der Bewegung. Im zentralen Bereich der Rotation, in dem die Mittelung nicht mehr im Auge wirksam wird, erscheint das Specklemuster wieder.

Bei der linearen periodischen Bewegung des Schirmes entsteht das Specklemuster auch als Streifen parallel zur Bewegung in der Nähe der Umkehrpunkte der Bewegung. In Bereichen, in denen die Geschwindigkeit abnimmt und die Wahrnehmungsgeschwindigkeit des Auges unterschreitet, entstehen sie wieder.

Durch die erfindungsgemäße Lösung werden diese unterschiedlichen Randbedingungen und Zusammenhänge berücksichtigt. Es ist auch möglich, die Streuscheibe bzw. die Bildspeckles in eine derartige Bewegungsbahn zu versetzen, die eine gleichmäßige Geschwindigkeit in zwei Dimensionen in allen Punkten der Bildfläche über die gesamte Zeit gewährleistet.

Weiterhin ist es möglich, dass die Streuscheibe entlang ihrer Oberfläche in zwei aufeinander senkrechte Achsen gleichzeitig in Schwingungen mit einer sinusförmigen Auslenkung als Funktion der Zeit gebracht wird. Dabei gerät die Streuscheibe in eine Bewegung entlang einer Lissajou-Bahn, und zwar so, dass jeder Punkt der Scheibe die gleiche Bewegung, d. h. mit der gleichen Frequenz, Amplitude, und Phase, vollführt.

Die einfachste der Lissajou-Bahnen ist der Kreisbogen. Dieser entsteht, wenn beide sinusförmigen Auslenkungen gleiche Frequenz und gleiche Amplitude, aber eine Phasendifferenz von 90° bzw. 270 ° zueinander haben. Eine etwas allgemeinere Form bei unterschiedlichen Amplituden sind Ellipsen. Bei einem geringen Frequenzunterschied zwischen den Auslenkungen verläuft die Bahn nach Ellipsen, die sich um die Achse drehen. Bei größeren Frequenzdifferenzen entstehen Bahnen, die sich stark von Ellipsen unterscheiden und sich u. U. wie eine "8" kreuzen. Allgemein gilt: bei ganzzahligem Verhältnis der Frequenzen entstehen periodische, bei irrationalem Verhältnis dagegen nicht-periodische Bahnen.

Bei dem hier unter anderem vorgeschlagenen Verfahren der periodischen Bewegung bei einer zeitlich kontinuierlichen Belichtung eines Bildes verschwinden die bisherigen Störungen im allgemeinen vollständig. Hier genügt beispielsweise eine Auslenkung der Streuscheibe bzw. des Specklemusters in zwei Achsen entlang einfacher periodischer Lissajou-Bahnen, wie Kreis- und Ellipsenbahnen, mit ausreichend großer Amplitude, die insbesondere größer als die Störkorngröße ist, bzw. einer Frequenz, die über der Wahrnehmungsfrequenz des Auges liegt, um die Schirminhomogenitäten bzw. Speckles im Auge auszumitteln.

Bei einem elektronischen Bildaufbau mit einer festen Bildwiederholfrequenz, beispielsweise bei einem Blitzlicht, können unter Umständen Störungen im Bild wieder sichtbar werden, die von der Auslenkfrequenz abhängig sind. Ihr Erscheinen ist analog der Wirkung eines Stroboskops. Der Bildmodulator hat eine feste Bildfrequenz und im Zeitraum jedes einzelnen Bildes werden die einzelnen Grundfarbenbilder Rot, Grün und Blau jeweils zeitlich hintereinander geschaltet. Dies bedeutet, dass innerhalb der Bildfrequenz, z.B. 50 Hz, 60 Hz, 75 Hz, 100 Hz, 120 Hz, die Einzelbelichtungen der Farben mit der dreifach höheren Frequenz auf dem Schirm erscheinen.

Dies hat bei einer periodischen Bewegung des Bildschirms bzw. des Specklemusters, wenn er nach einer festen Periodendauer in die gleiche Lage zurückkehrt, zur Folge, dass die Bildstörung vom Auge während der Belichtungsdauer, wenn beide Frequenzen übereinstimmen, als stehendes Muster wahrgenommen wird. Auch bei kleinen Frequenzunterschieden der Bild- und Schaukelfrequenz gibt es ein sichtbares Wandern der Störungen über den Schirm, wie es bei stroboskopischer Beleuchtung von periodischen Vorgängen hinreichend bekannt ist. Dies gilt auch bei Verfahren der Grundfrequenz bzw. Oberharmonischen, sowie unter Umständen auch bei jedem rationellen Zahlenverhältnis der Grundfrequenzen.

Um auch noch diesem zusätzlichen Störeffekt bei elektronischen Projektionen entgegenzuwirken sieht die Erfindungen verschiedene zusätzliche Maßnahmen vor:

Es kann z.B. ein ausreichend hoher Frequenzunterschied zwischen der Bewegungs- und Bildfrequenz eingestellt werden, die die Wahrnehmungsfrequenz des Auges übersteigt, damit das stroboskopische Bewegungsmuster schneller als die Wahrnehmung des Auges ist.

Es kann auch die Bewegungsfrequenz der Bewegung so schnell hin und her verschoben bzw. gewobbelt werden, dass bei unterschiedlichen Bildern unterschiedliche Störstellen vom Auge gesehen und dadurch gemittelt werden.

Es kann weiterhin ein Schwingungsmuster mit Hilfe von Zufallsrauschen in beiden Achsen verwendet werden, damit sich nicht mehr identische Störungen im Auge wiederholt überlagern.

Ein gleiches Ergebnis kann auch die Bewegung des Störmusters in nicht-periodischer Lissajou-Bahn bewerkstelligen, in der keine Ortswiederholung des Störmusters im Auge des Betrachters vorkommt. Die Voraussetzung dafür ist, wie bereits oben dargelegt, dass das Zahlenverhältnis der Frequenzen der zueinander senkrechten Sinusschwingungen irrational ist.

Für das irrationale Zahlenverhältnis gibt es ein Optimum, in welchem die Entfernung der Bahn immer möglichst weit von Bahnen mit rationalem Zahlenverhältnis und damit die Wirksamkeit der Ausmittelung am größten ist. Dieses Optimum wird erreicht, wenn das Frequenzverhältnis der beiden Schwingungen $f_x/f_x$ sich wie der wohlbekannte "goldene Schnitt" verhält mit

$$f_x/f_y = \tfrac{1}{2} + \sqrt{5}/2$$

Es versteht sich, dass in allen Fällen die Frequenzen der Einzelschwingungen mindestens schneller sein müssen als die Auffassungsfrequenz des Auges im Bereich von 20 Hz, damit das Auge nicht mehr der Bewegung der Störmuster verfolgen kann.

Das erfindungsgemäße Verfahren und die Vorrichtungen zur Durchführung dieses Verfahrens werden nachfolgend beispielhaft anhand der Zeichnungen beschrieben, in denen

Fig. 1 einen Darstellungsschirm zeigt;

Fig. 2 einen Darstellungs- bzw. Projektionsschirm zeigt, der ein Zwischenbildschirm für die Aufprojektion ist;

Fig. 3 eine Ausführungsform der Erfindung darstellt, bei der ein Lichtintegrator zu Schwingungen angeregt wird;

Fig. 3a schematisch einen Querschnitt durch den in Figur 3 gezeigten Lichtintegrator senkrecht zur optischen Achse zeigt;und

Fig. 4 eine weitere Ausführungsform der Erfindung zeigt, bei der ein Lichtleiter bewegt wird um Störungen bzw. Bildspeckles zu reduzieren oder zu beseitigen.

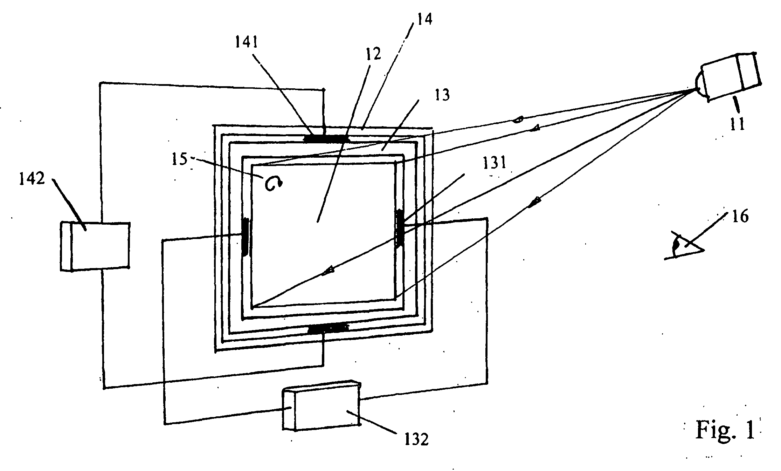

Ein Aufbau zur Durchführung eines Verfahrens zur Reduktion von Bildspeckles ist zunächst in Fig. 1 schematisch dargestellt.

Ein Darstellungsschirm 12 ist als Aufprojektionsschirm zweidimensional in Flächenrichtung bewegbar gelagert. Ein Projektor 11 ist mit einem Laser, einem Bildmodulator und einer Projektionsoptik versehen, um ein reelles Bild auf den Bildschirm 12 abzubilden. Der Bildschirm 12 ist in einem inneren Halterahmen 13 einer kardanischen Aufhängung des Bildschirmes 12 befestigt. Ein Paar von ersten, sich gegenüberliegenden Aktoren 131 wird durch einen Funktionsgenerator 132 angesteuert um den Bildschirm 12 in eine erste lineare Schwingung zu versetzen, so dass er in einer ersten Richtung, die durch die beiden ersten Aktoren 131 definiert ist, in seiner Flächenebene hin- und herschwingt. Weiterhin ist ein äußerer Halterahmen 14 vorgesehen, in der der innere Halterahmen 13 bewegbar befestigt ist, um die kardanische Aufhängung des Bildschirmes 12 zu bilden.

Ein weiteres Paar von Aktoren 141 dient dazu, den Bildschirm 12 in eine zweite lineare Schwingung in Flächenrichtung, die senkrecht zu der ersten Schwingung verläuft, zu versetzen. Dabei treibt bzw. steuert ein zweiter Funktionsgenerator 142 den zweiten Aktor 141 bzw. das zweite Paar von Aktoren 141, so dass der Bildschirm 12 in einer zweiten Richtung, die durch die beiden zweiten Aktoren 141 definiert ist, in seiner Flächenebene hin- und herschwingt.

Im Betrieb wird der Bildschirm 12 zur Reduktion der Bildstörungen mittels der beiden Aktorpaare 131,141 so bewegt, dass er eine zweidimensionale, beispielsweise kreisförmige Bewegung 15 ausführt. In diesem Fall haben die beiden Sinusschwingungen gleiche Frequenz und gleiche Amplitude mit einem Phasenunterschied von 90° bzw 270°. In der Fig. 1 beobachtet ein Betrachter 16 die Aufprojektion auf den Schirm 12.

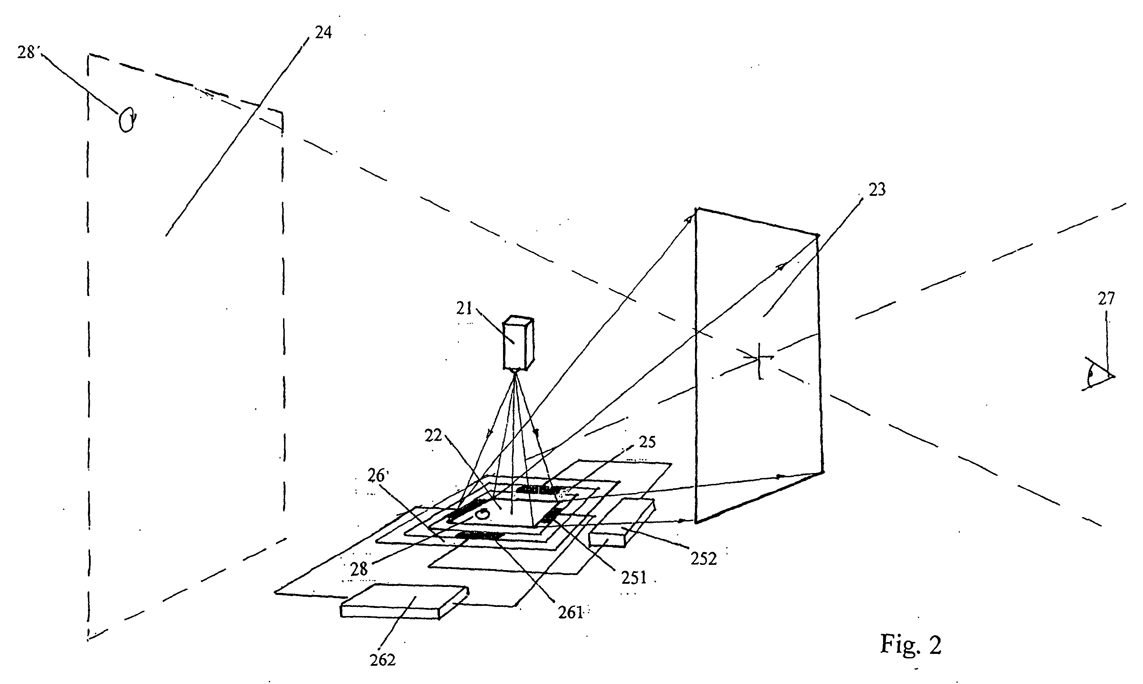

In Fig. 2 ist eine Vorrichtung gezeigt, in der das durch einen mit einem Laser und einem Bildmodulator versehenen Bildprojektor 21 erzeugte Bild, das in der Ebene des Bildmodulators liegt, erst auf einen Zwischenbildschirm 22 als reelles Bild abgebildet wird und dieses innerhalb der Brennweite einer holographischen Linse, die einen Darstellungsschirm 23 bildet, als virtuelles Bild 24 dem Auge eines Betrachters 27 angeboten wird.

Dabei wird, wie bei der in Fig. 1 gezeigten Vorrichtung, der das reelle Bild tragende Schirm, der in diesem Fall als Zwischenbildschirm 22 vorgesehen ist, in eine zweidimensionale laterale Bewegung parallel zu seiner Oberfläche gesetzt. Das projizierte Bild bleibt dabei raumfest, aber es wird über seine Strukturen, die z. B. Inhomogenitäten oder Speckles sein können, im Auge des Betrachters 27 zeitlich gemittelt.

Die notwendige laterale Bewegung des Zwischenbildschirms 22 mit einem Ausschlag von typischerweise nur einigen 10 µm bis einige 100 µm wird hier, ebenso wie in der in Fig. 1 gezeigten Ausführungsform, mit Hilfe eines doppelten Schirmrahmens, d.h. mit einer kardanischen Aufhängung, durchgeführt. Es sind aber auch andere dem Fachmann geläufige Verfahren und Einrichtungen möglich, um den Bildschirm 12 bzw. 22 in eine gezielt gesteuerte zweidimensionale laterale Bewegung zu versetzen.

In dem in Fig. 2 gezeigten Beispiel ist, ebenso wie bei Fig.1, in jeder der Bewegungsachsen des Projektionsschirms 22 ein Aktor 251, 261 vorgesehen, der z.B. als Piezoaktor bzw. als magnetischer Aktor ausgestaltet ist. Die Aktoren können einseitig auf jeder Seite oder auch paarweise angeordnet sein.

Zur Einstellung der benötigten Bewegung ist auch in diesem Beispiel für jede Bewegungsrichtung ein Funktionsgenerator 252, 262 als Signalgeber vorgesehen, der die Auslenkungen in die zwei Achsen x und y in festen Beziehungen zueinander antreibt und die Bewegung an die Bildfrequenz des Bildmodulators koppelt.

In Fig. 2 erfolgt durch den mit Laser, Bildmodulator und Projektionsoptik versehenen Bildprojektor 21 eine Aufprojektion auf den Projektionsschirm bzw. Zwischenbildschirm 22 und anschließend eine virtuelle Bilderzeugung für den Betrachter 27. Der als holografische Linse ausgebildete Darstellungsschirm 23 ist beispielsweise ein holographisches Abbild einer außeraxialen Fresnelschen Zonenplatte. Diese holographische Linse erzeugt als Lupe das virtuelle, vergrößerte Bild 24 des Zwischenbildschirmes 22 in einem weiten Abstand vom Betrachter 27.

Der Zwischenbildschirm 22 ist in einem inneren kardanischen Rahmen 25 aufgehängt und wird mit dem ersten Paar von Aktoren 251 in lineare Schwingung versetzt, wobei der erste Funktionsgenerators 252 die Aktoren 251 ansteuert, d.h. er bildet eine Steuereinrichtung. Der innere Rahmen 25 ist wiederum in der kardanischen Aufhängung in einem zweiten, äußeren Rahmen 26 befestigt und wird dort mit dem zweiten Aktor 261, der als Paar von Aktoren ausgebildet ist, in einer Achse senkrecht zu der ersten Bewegungsachse ebenfalls in lineare Schwingung versetzt. Ein zweiter Funktionsgenerators 262 steuert den Aktor bzw. die Aktoren 261 an.

Angedeutet ist eine Kreisbewegung 28 des Bildschirmes bzw. Zwischenbildschirmes 22 als einfachste Bewegungsbahn, die sich als Kreisbewegung 28'auf das virtuelles Bild 24 überträgt, wodurch Inhomogentitäten des Zwischenbildschirmes 22 bzw. Speckles im Auge des Betrachters 27 ausgemittelt werden.

Durch das mehrstufige System wird durch die stufenweise Vergrößerung auf den letzten Darstellungsschirm zusätzlich eine Minimierung von Bildfehlern erreicht. Bei der Herstellung von virtuellen Bildern wird das reelle Bild des vorgeschalteten Zwischenbildschirmes über eine Lupe vergrößert und virtuell abgebildet, wobei die Lupe dann z.B. als Fresnel Linse, oder als plane holographische Linse ausgelegt ist, die dann gleichzeitig als Darstellungsschirm für den Betrachter dient.

Eine weitere, in den Figuren nicht dargestellte Möglichkeit ist die Aufhängung des Schirmes in einer relativ weich federnden Aufhängung eines Rahmens und Anbringung eines miniaturisierten Exzenter-Motors direkt an den Schirm. Beim Antreiben des Motors gerät ein Antriebselement des Motors in eine Drehschwingung, die sich auf den Schirm überträgt. Derartige Exzenter-Motoren werden z.B. zur Erzeugung eines haptischen Klingelzeichens bei Handy-Telefonen verwendet.

Allgemein sind verschiedene Arten der Bewegung von Bildschirmen geeignet, die sowohl bei Bildschirmspeckles als auch bei inhomogener Struktur der Schirme zur Ausmittelung führen. Specklemuster in Laser-Bildprojektionen können aber auch auf anderem Wege im Strahlengang des Projektors ohne Einfluß auf die Qualität des Bildes in Bewegung gesetzt werden.

Es versteht sich, dass der Strahlengang zwischen Bildmodulator und Bildschirm in einem Projektor zwar unbeweglich sein muss, damit ein scharfes reelles Bild für den Betrachter auf dem Bildschirm entsteht. Erfindungsgemäß kann jedoch auch vor dem Bildmodulator der Beleuchtungsstrahl ohne einen Einfluß auf die Schärfe des Bildes bewegt werden, um durch Ausmittelung die genannten Bildstörungen zu beseitigen.

Nachfolgend sind verschiedene Beispiele gezeigt, um mit der Laserbeleuchtung den Strahl und damit auch das Specklemuster in zwei Achsen in Drehbewegung zu versetzen.

Vor dem Bildmodulator ist bei modernen Projektoren ein Lichtintegrator aufgestellt, der dafür sorgt, dass die Helligkeit des Lichtes über die Fläche des Modulators möglichst gleichmäßig verläuft. Dieser Lichtintegrator ist meist ein länglicher Glasstab mit rechteckigem Querschnitt oder ein innen verspiegeltes Rohr mit rechteckigem Querschnitt. Eine weitere Variante des Lichtintegrators sind zwei Platten mit dichtem Linsenarray. In beiden Arten der Lichtintegratoren wird dafür gesorgt, dass das von der Quelle einfallende Lichtbündel erst in eine Vielzahl von Teilbündeln aufgeteilt wird, die vor ihrem Eintreffen auf den Modulator möglichst gut miteinander gemischt werden und dadurch für eine homogene Ausleuchtung des Bildmodulators sorgen.

Diese Lichtintegratoren, die z.B. als Glasstab, Hohlstab oder Linsenarrays ausgebildet sind, können nun, ebenso wie die oben gezeigten Bildschirme, mit Aktoren an den zueinander senkrechten Seiten in verschiedenartige zweidimensionale Bewegungsbahnen versetzt werden.

Eine erfindungsgemäße Ausführungsform mit einem innenverspiegelten Hohlstab besteht darin, dass dieser mit einer transparenten Flüssigkeit gefüllt ist, wobei mit senkrecht zueinander angeordneten Piezoschwingern an den Seiten des Hohlstabes die Flüssigkeit in zwei zueinander senkrechte Schwingungen versetzt wird. Durch die Dichteschwingungen der Flüssigkeit werden dann die Teilstrahlen, die entlang des Lichtintegrators geleitet werden, auch in Drehbewegung gesetzt.

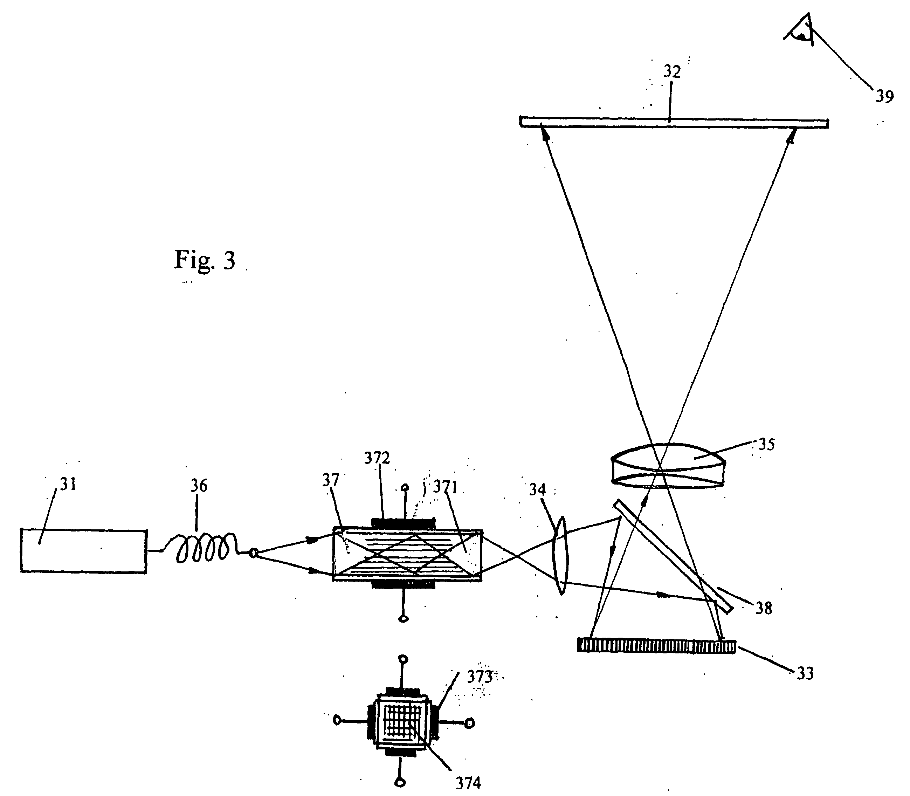

Eine derartige Ausführungsform der Erfindung ist schematisch in Figur 3 und 3a gezeigt. Mit einem Beleuchtungslaser 31 als Lichtquelle wird ein Bild erzeugt, das mit Hilfe einer Linse 34 zur Lichtbündelung, eines Strahlteilers 38, eines Bildmodulators 33 und einer Projektionsoptik 35 auf einen Projektionsschirm 32 projiziert wird. Der Projektionsschirm 32 ist hier als Rückprojektionsschirm ausgestaltet, d.h., das Bild wird auf seine Rückseite projiziert und ein Beobachter 39 betrachtet das projizierte Bild von seiner anderen Seite.

Das vom Beleuchtungslaser 31 erzeugte Laserlicht wird dabei zuvor über einen Lichtleiter 36 zu einem Lichtintegrator 37 geleitet. Der Lichtintegrator 37 ist mit einer optisch transparenten Flüssigkeit 371 gefüllt, in der mit senkrecht angeordneten, sich paarweise gegenüberliegenden Piezoschwingern 372 und 373 senkrecht zur optischen Achse Schallwellen 374 (siehe Figur 3a) erzeugt werden, die sich senkrecht zueinander und senkrecht zur optischen Achse ausbreiten. Die Schallwellen 374 haben eine zusätzliche brechende Wirkung auf die Ausbreitung der Teilstrahlen. Durch die mit den Aktoren 372, 373 erzeugte zweidimensionale Bewegung werden die Störungen zeitlich ausgemittelt.

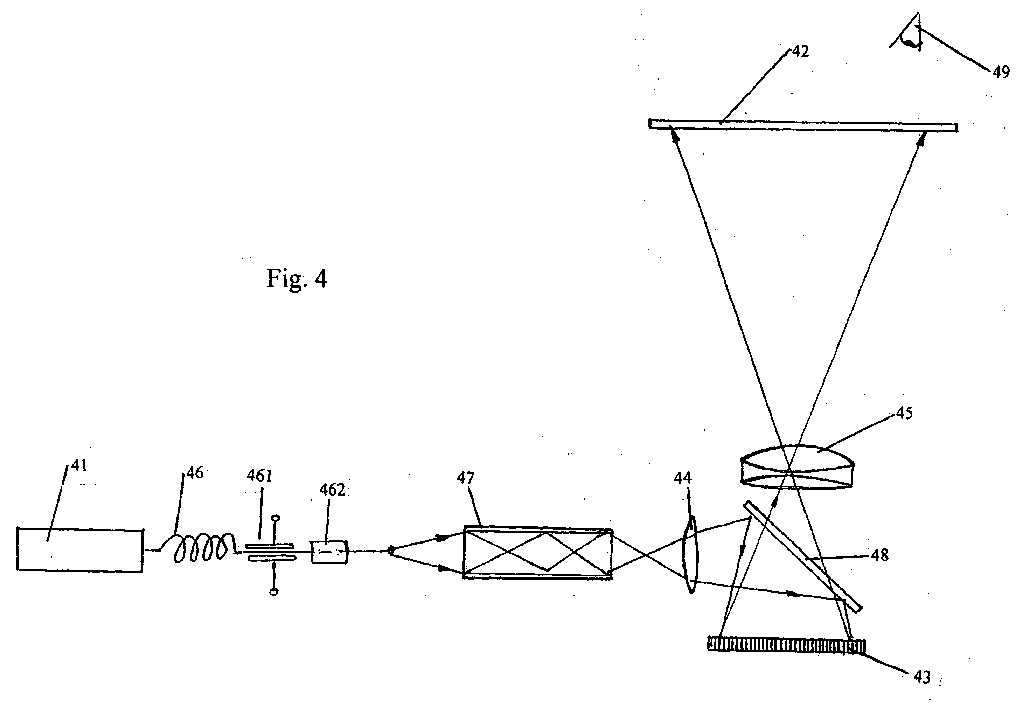

Fig. 4 zeigt schematisch eine weitere Ausführungsform, in der das mit einem Beleuchtungslaser 41 als Lichtquelle erzeugte Laserlicht in einem Lichtwellenleiter 46, in diesem Fall entlang einer Flüssigkeitsfaser, zu einem Lichtintegrator 47 geleitet wird. Der als optische Faser ausgebildete Lichtwellenleiter 46 wird auf ähnliche Weise wie bei den oben beschriebenen Ausführungsformen mit einer entsprechenden Aktorik in zwei Richtungen senkrecht zueinander wie oben beschrieben bewegt. Dazu sind zueinander senkrecht angeordnete Schwingungsaktoren 461, 462 vorgesehen. Vor allem eine Flüssigkeitsfaser mit sehr vielen Ausbreitungsmoden und dem weichen Mitschwingen der Flüssigkeit ist für diese Zwecke besonders geeignet.

Das zweidimensional, senkrecht zu seiner Ausbreitungsrichtung bzw. zur optischen Achse bewegte Licht wird nach seinem Austritt aus dem Lichtintegrator 47 über eine Linse 44 zur Strahlbündelung, einen Teilerspiegel 48, den Bildmodulator 43 und einer Optik 45 auf von hinten auf den Rückprojektionsschirm 42 projiziert. Ein Beobachter 42 kann nun das Bild auf der Vorderseite des Rückprojektionsschirm ohne störende Bildspeckles betrachten.

Es versteht sich, dass die x und y Bewegungen des Strahlbündels nicht zwingend in gleicher Ebene durchgeführt werden müssen, sondern auch wie in der Figur 4 dargestellt wird, räumlich hintereinander durchgeführt werden können.

Zusammengefasst zeigt die Erfindung auch ein Verfahren zur Beseitigung von Inhomogenitäten und Speckles auf dem Schirm durch ihre Ausmittelung im Auge des Betrachters.

Dabei können sich die Frequenzen der Bewegungen im Zahlenverhältnis des "goldenen Schnitts" von ($\frac{1}{2}$ + $\sqrt{5}$/2) verhalten.

Der Schirm ist beispielsweise ein Zwischenbildschirm des projizierten reellen Bildes, das noch mit weiterer Projektion auf einen zweiten Darstellungsschirm als reelles Bild zur direkten Ansicht oder als virtuelles Bild für den Betrachter projiziert wird.

Zusammenfassend wird hier dargestellt: ein Verfahren zur Bewegung von Lichtintegratoren in kohärenten Laser-Bildprojektoren oder Bildprojektoren mit zeitlich inkohärenten Lichtquellen, beispielsweise Leuchtdioden, oder mit Lampen als Lichtquellen, zur Beseitigung von Speckles auf Darstellungs- und Zwischenschirmen, wobei der Lichtintegrator vor dem Bildmodulator in zwei zueinander und zu seiner optischen Achse senkrechten periodischen Schwingungen mit rationalem oder irrationalem Zahlenverhältnis der Frequenzen entlang von Lissajou-Bahnen in Bewegung gesetzt wird.

Die Erfindung umfasst insbesondere ein Verfahren zur Bewegung einer optischen Flüssigkeit innerhalb Lichtintegratoren in Laserbildprojektoren zur Beseitigung von Speckles auf Darstellungs- und Zwischenschirmen, wobei die Flüssigkeit innerhalb des Lichtintegrators vor dem Bildmodulator in zwei zueinander und zu seiner optischen Achse senkrechte periodische Schwingungen mit rationalem oder irrationalem Zahlenverhältnis der Frequenzen entlang von Lissajou-Bahnen in Bewegung gesetzt wird.

Ferner wird dargestellt: ein Verfahren zur Bewegung von Lichtleitern aus Glas, Plastik oder Flüssigkeit vor Lichtintegratoren vor Bildmodulatoren in Laser-Bildprojektoren zur Beseitigung von Speckles auf Darstellungs- und Zwischenschirmen, wobei der Lichtleiter vor dem Lichtintegrator entlang seines Mantels in zwei zueinander und zu seiner optischen Achse senkrechten periodischen Schwingungen mit rationalem oder irrationalem Zahlenverhältnis der Frequenzen entlang von Lissajou-Bahnen in Bewegung gesetzt wird.

Insbesondere können die aufeinander senkrechten Schwingungen mit einem Zufallsfrequenzspektrum (Frequenz-Zufallsfrequenzspektrum) angeregt werden.

Die Frequenz der aufeinander senkrechten Schwingungen wird zum Beispiel gegenüber der Bildwiederholfrequenz des Projektors oder seiner harmonischen so eingestellt, dass die Differenzfrequenz beider um 20 Hz höher ist als die Auffassungsfrequenz des menschlichen Auges.

Die Frequenz der aufeinander senkrechten Schwingungen wird bevorzugt gegenüber der Bildwiederholfrequenz des Projektors oder seinen harmonischen Schwingungen ständig verändert.

Die Frequenzen der aufeinander senkrechten Schwingungen stehen vorteilhafterweise im Zahlenverhältnis des goldenen Schnitts ($\frac{1}{2}$ + $\sqrt{5}$/2) zueinander.

## Patentansprüche

1. Verfahren zur Beseitigung von stationären Bildstörungen bei Bildprojektionen mit zeitlich und/oder räumlich kohärentem Licht, bei dem mit einem Projektionssystem mittels eines Strahls kohärenten Lichts ein Bild auf einen Projektionsschirm (12; 22; 32; 42) projiziert wird und störende Speckles und/oder durch Inhomogenitäten verursachte Störungen zeitlich ausgemittelt werden, wobei mindestens ein optisches Element (371) des Projektionssystems in zwei zueinander senkrechten und senkrecht zur optischen Achse verlaufenden Richtungen in gleichzeitige Schwingungen versetzt wird und während der Projektion in beiden Richtungen zeitlich sinusförmige Bewegungen ausführt, so dass die Speckles und/oder Störungen durch ihre Bewegung im Auge eines Betrachters (16; 27; 39; 49) beseitigt werden, **dadurch gekennzeichnet, dass** das optische Element eine Flüssigkeit (371) ist, die in einem Lichtintegrator (37) oder in einem Lichtwellenleiter (46) enthalten ist und mit Schallwellen beaufschlagt wird.

2. Verfahren nach Anspruch 1, **dadurch gekennzeichnet, dass** das optische Element (371) im Strahlengang vor einen Bildmodulator (33; 43) geschaltet ist.

3. Verfahren nach Anspruch 1 oder 2, **dadurch gekennzeichnet, dass** die Bewegungen des optischen Elements (371) derart erfolgen, dass eine zumindest annähernd gleichmäßige Geschwindigkeit einzelner Teilelemente des optischen Elements (371) in zwei Dimensionen erfolgt.

**4.** Verfahren nach einem der vorhergehenden Ansprüche, **dadurch gekennzeichnet, dass** die Bewegungen Lissajou-Bahnen bilden, insbesondere in Form von Kreisen, Ellipsen oder sich kreuzenden Bahnen.

**5.** Verfahren nach einem der vorhergehenden Ansprüche, **dadurch gekennzeichnet, dass** die beiden Schwingungen Frequenzen aufweisen, die zueinander in einem irrationalen Zahlenverhältnis stehen, das dem Verhältnis des Goldenen Schnitts entspricht.

**6.** Verfahren nach einem der Ansprüche 1 bis 4, **dadurch gekennzeichnet, dass** die beiden Schwingungen mit einem Zufallsfrequenzspektrum angeregt werden.

**7.** Verfahren nach einem der vorhergehenden Ansprüche, **dadurch gekennzeichnet, dass** die Frequenz oder die Frequenzen der beiden Schwingungen gegenüber der Bildwiederholfrequenz eines Projektors (11; 21; 31; 41) oder seiner Harmonischen derart eingestellt wird, dass die jeweilige Differenzfrequenz höher ist als die Auffassungsfrequenz des menschlichen Auges.

**8.** Verfahren nach einem der vorhergehenden Ansprüche, **dadurch gekennzeichnet, dass** die Frequenz oder die Frequenzen der aufeinander senkrecht stehenden Schwingungen gegenüber der Bildwiederholfrequenz des Projektors (11; 21; 31; 41) oder seiner Harmonischen während der Projektion ständig verändert werden.

**9.** Vorrichtung zur Beseitigung von stationären Bildstörungen bei Bildprojektionen mit zeitlich und/oder räumlich kohärentem Licht, mit
mindestens einem optischen Element (371) zur Führung von kohärentem Licht in einem Projektionssystem, und mit
einer Antriebseinrichtung (372, 373; 461; 462), die mit dem optischen Element (371) gekoppelt ist, um das optische Element (371) in zwei zueinander senkrechten und senkrecht zur optischen Achse verlaufenden Richtungen in gleichzeitige Schwingungen zu versetzen, so dass Speckles und/oder durch Inhomogenitäten verursachte Störungen durch ihre Bewegung im Auge eines Betrachters (39; 49) ausgemittelt werden,
**dadurch gekennzeichnet,**
**dass** das optische Element eine in einem Lichtintegrator (37) oder einem Lichtwellenleiter (46) enthaltene Flüssigkeit (371) ist, die im Betrieb mit Schallwellen beaufschlagt wird.

**10.** Vorrichtung nach Anspruch 9, **dadurch gekennzeichnet, dass** die Antriebseinrichtung ein oder mehrere Aktoren (372, 373; 461, 462) umfasst, die als Piezoaktor und/oder als magnetischer Aktor ausgebildet sind.

**11.** Vorrichtung nach einem der Ansprüche 9 oder 10, **dadurch gekennzeichnet, dass** die Antriebseinrichtung eine Steuereinrichtung zur Ansteuerung der Aktoren (372, 373; 461, 462) auf eine Weise umfasst, dass das optische Element (371) im Betrieb Bewegungen in Form von Lissajou-Bahnen ausführt, insbesondere in Form von Kreisen, Ellipsen oder sich kreuzenden Bahnen.

**Claims**

**1.** A method for eliminating stationary image perturbations in image projections with temporally and/or spatially coherent light, wherein with a projection system an image is projected onto a projection screen (12; 22; 32; 42) by means of a beam of coherent light, and interfering speckles and/or perturbations caused by inhomogeneities are temporally averaged out, at least one optical element (371) of the projection system being caused to execute simultaneous oscillations in two directions extending perpendicular to one another and perpendicular to the optical axis and executing temporally sinusoidal movements in both directions during the projection, so that the speckles and/or perturbations are eliminated by virtue of their movement in the eye of an observer (16; 27; 39; 49),
**characterised in that**
the optical element is a liquid (371) which is contained in a light integrator (37) or in an optical waveguide (46) and which is subjected to acoustic waves.

**2.** Method according to Claim 1, **characterised in that** the optical element (371) is connected in the beam path upstream of an image modulator (33; 43).

**3.** Method according to Claim 1 or 2, **characterised in that** the movements of the optical element (371) are effected in such a manner that an at least approximately uniform velocity of individual constituent elements of the optical element (371) occurs in two dimensions.

**4.** Method according to one of the preceding claims, **characterised in that** the movements form Lissajous trajectories, in particular in the form of circles, ellipses or intersecting trajectories.

**5.** Method according to one of the preceding claims, **characterised in that** the two oscillations have frequencies that stand in relation to one another in an irrational numerical ratio that corresponds to the ratio of the golden section.

6. Method according to one of Claims 1 to 4, **characterised in that** the two oscillations are excited with a random-frequency spectrum.

7. Method according to one of the preceding claims, **characterised in that** the frequency or frequencies of the two oscillations is/are adjusted in such a manner in relation to the image-repetition frequency of a projector (11; 21; 31; 41) or its harmonics that the respective difference frequency is higher than the frequency of perception of the human eye.

8. Method according to one of the preceding claims, **characterised in that** the frequency or frequencies of the oscillations that are perpendicular to one another is/are continually changed during the projection in relation to the image-repetition frequency of the projector (11; 21; 31; 41) or its harmonics.

9. A device for eliminating stationary image perturbations in image projections with temporally and/or spatially coherent light, with at least one optical element (371) for guiding coherent light in a projection system, and with a drive mechanism (372, 373; 461; 462) which is coupled with the optical element (371) in order to cause the optical element (371) to execute simultaneous oscillations in two directions extending perpendicular to one another and perpendicular to the optical axis, so that speckles and/or perturbations caused by inhomogeneities are averaged.out by virtue of their movement in the eye of an observer (39; 49), **characterised in that** the optical element is a liquid (371) contained in a light integrator (37) or in an optical waveguide (46), which in operation is subjected to acoustic waves.

10. Device according to Claim 9, **characterised in that** the drive mechanism comprises one or more actuators (372, 373; 461, 462) which take the form of piezoelectric actuators and/or magnetic actuators.

11. A device according to one of Claims 9 or 10, **characterised in that** the drive mechanism comprises a control apparatus for controlling the actuators (372, 373; 461, 462) in such a way that the optical element (371) in operation executes movements in the form of Lissajous trajectories, in particular in the form of circles, ellipses or intersecting trajectories.

**Revendications**

1. Procédé pour éliminer des perturbations stationnaires d'images lors de projections d'images avec de la lumière à cohérence temporelle et/ou spatiale, selon lequel un système de projection projette à l'aide d'un faisceau de lumière cohérente une image sur un écran de projection (12 ; 22 ; 32 ; 42) et on détermine les speckles perturbateurs et/ou les perturbations engendrés par les inhomogénéités, selon lequel
au moins un élément optique (371) du système de projection est mis simultanément en vibration dans deux directions perpendiculaires entre elles et perpendiculaires à l'axe optique et pendant la projection elles effectuent dans les deux directions des mouvements sinusoïdaux dans le temps de façon à éliminer les speckles et/ou les perturbations par leur mouvement dans l'oeil de l'observateur (16 ; 27 ; 39 ; 49),
**caractérisé en ce que '**
l'élément optique est un liquide (371) contenu dans un intégrateur de lumière (37) ou dans un guide de lumière (46) et soumis à des ondes sonores.

2. Procédé selon la revendication 1,
**caractérisé en ce que**
l'élément optique (371) est placé en amont d'un modulateur d'image (33 ; 43) dans le chemin du faisceau.

3. Procédé selon la revendication 1 ou 2,
**caractérisé en ce que**
les mouvements de l'élément optique (371) sont tels qu'au moins une vitesse sensiblement régulière des différents éléments partiels de l'élément optique (371) se font dans deux dimensions.

4. Procédé selon l'une des revendications précédentes,
**caractérisé en ce que**
les mouvements forment des courbes de Lissajou en particulier sous la forme de cercles, d'ellipses ou de trajectoires croisées.

5. Procédé selon l'une des revendications précédentes,
**caractérisé en ce que**
les deux oscillations ont des fréquences qui sont entre elles dans un rapport numérique irrationnel correspondant au rapport dit de la section d'or.

6. Procédé selon l'une des revendications 1 à 4,
**caractérisé en ce que**
les deux oscillations sont excitées par un spectre de fréquence aléatoire.

7. Procédé selon l'une des revendications précédentes,
**caractérisé en ce que**
la fréquence ou les fréquences des deux oscillations sont réglées par rapport à la fréquence de répétition d'image d'un projecteur (11 ; 21 ; 31 ; 41) ou d'une harmonique de celle-ci pour que la fréquence différentielle respective soit supérieure à la fréquence de perception de l'oeil humain.

8.  Procédé selon l'une des revendications précédentes,
    **caractérisé en ce que**
    la fréquence ou les fréquences des oscillations perpendiculaires sont modifiées en permanence par rapport à la fréquence de répétition d'image du projecteur (11 ; 21 ; 31 ; 41) ou d'une harmonique pendant la projection.

9.  Dispositif pour éliminer les perturbations stationnaires d'images pour des projections d'images avec de la lumière à cohérence temporelle et/ou spatiale comportant au moins un élément optique (371) pour conduire la lumière cohérente dans un système de projection, et
    une installation d'entraînement (372, 373 ; 461 ; 462) couplée à l'élément optique (371) pour faire osciller l'élément optique (371) simultanément dans deux directions perpendiculaires entre elles et perpendiculaires à l'axe optique pour éliminer les speckles et/ou les perturbations occasionnés par les inhomogénéités grâce au mouvement dans l'oeil d'un observateur (39 ; 49),
    **caractérisé en ce que**
    l'élément optique est un liquide (371) contenu dans un intégrateur de lumière (37) ou un guide de lumière (46), ce liquide étant soumis à des ondes sonores.

10. Dispositif selon la revendication 9,
    **caractérisé en ce que**
    l'installation d'entraînement comprend un ou plusieurs actionneurs (372, 373; 461, 462) réalisés sous la forme d'actionneurs piézo-électriques et/ou d'actionneurs magnétiques.

11. Dispositif selon l'une des revendications 9 ou 10,
    **caractérisé en ce que**
    l'installation d'entraînement comprend une installation de commande pour commander les actionneurs (372, 373 ; 461, 462) pour que l'élément optique (371) effectue en fonctionnement des mouvements sous la forme de courbes de Lissajou, notamment sous la forme de cercles, d'ellipses ou de trajectoires croisées.

Fig. 1

Fig. 2

Fig. 3

Fig. 4

EP 1 260 850 B1